# EUROPEAN PATENT APPLICATION

(11) **EP 4 769 308 A1**
(43) Date of publication of application: **01.07.2026**
(21) Application number: 24223248.6
(22) Date of filing: 24.12.2024
(51) Int. Cl.: G06T 7/33

(54) **GENERATING A POINT CLOUD**

(71) Applicant: Trimble Inc, Westminster CO 80021 (US)
(72) Inventor: BELLMANN, Richard, 07745 Jena (DE)
(74) Representative: Smith, Mark David

(57) **Abstract**

A method for generating a point cloud from an image of a scene, the method comprising: obtaining image data representing an image of a scene as captured by an image sensor; generating, based on the image data, an estimated point cloud comprising a plurality of estimated point positions corresponding to features of the scene, by using a machine-learning model trained to estimate point positions from such image data; selecting one or more features of the scene; obtaining, a measured point cloud comprising a plurality of measured point positions measured using electronic distance measurement, said plurality of measured point positions comprising at least respective measured point positions corresponding to the selected one or more features; comparing respective ones of the estimated point positions that correspond to the selected one or more features, and the respective ones of the measured point positions that correspond to the selected one or more features; determining based on the comparison, a transformation that can be applied to the plurality of estimated point positions, such that the respective ones of the estimated point positions more closely align with the respective ones of the measured point positions; and storing the transformation in a computer-readable memory. A further optional method comprises: obtaining second image data representing an image of a scene as captured by an image sensor; generating, based on the second image data, a second estimated point cloud comprising a plurality of estimated point positions corresponding to features of the scene, by using a machine-learning model trained to estimate point positions from such image data; and transforming the second estimated point cloud into a transformed point cloud using the transformation.

## Description

### TECHNICAL FIELD

The present disclosure relates to methods, apparatus and systems for generating a point cloud from an image of a scene, wherein a point cloud comprises a plurality of point positions in three-dimensional space corresponding to features of a scene.

### BACKGROUND

In the field of construction surveying it is often desired to determine precise positions in three-dimensional space, of objects or features within a scene that is the subject of a survey. Traditionally, instruments such as theodolites have been used to measure angles between an anchor point at which the instrument is located and an object under survey, from which distances and positions can be calculated. An improved instrument, termed a Total Station can, in addition to being able to measure angles, also measure distances by measurement of time taken for electromagnetic waves (such as light) to travel a distance to and from an object under survey. Measurement of objects using Theodolites and Total Stations is relatively slow, even when automated, since the instrument's measuring head must be accurately moved/positioned so as to centre an object under survey in the instrument's viewfinder before an angle and/or distance measurement can be taken. An alternative instrument, termed a Scanner, also measures distances by measuring time taken for electromagnetic waves (e.g. laser light) to travel to/from an object under survey. Scanners commonly employ a spinning mirror for causing a laser beam to scan a scene many times per second and thereby perform many hundreds of distance measurements per minute, in which corresponding measurements of the mirror angles in two orthogonal directions are also taken, resulting in a point cloud comprising a plurality of point positions in three-dimensional space, said point positions including positions of points corresponding to features of the scene (e.g. points, lines between such points, intersections between lines or surfaces, boundaries between areas of high and low contrast, etc.). Problems with both Total Stations and Scanners remain, which the present application seeks to address.

### SUMMARY

In overview, the present disclosure provides methods, apparatus and systems which provide for more efficient generation of point clouds, and which are effective even in confined spaces such as tunnels or pipes, where Total Stations and Scanners have not previously been suitable for use.

For example, it has been realised that Total Stations are relatively slow to measure individual point positions for inclusion in a point cloud, and so are unsuitable for generating point clouds that are high resolution by virtue of comprising a large number of position points. As an alternative instrument, Scanners are able to more quickly measure large numbers of point positions, but Scanners are not suited for use in close proximity to features that are to be measured. Thus, Scanners are not generally suitable for use to measure features on the inside of a pipe because the cross-sectional area inside a pipe is relatively small, such that any instrument placed within a pipe is generally much closer to the inside of the pipe than the minimum distance limit of a Scanner which is typically around 0.5m (if accuracy is not to suffer unduly). Total Stations also have a minimum distance limit which must be observed otherwise accuracy suffers. Both of these types of instrument are also relatively large and expensive. The inventors have noted these limitations and sought to overcome them.

In general, the present disclosure overcomes the limitations of existing approaches, partly by providing for a point cloud to be generated from a 2-dimensional image. Machine-learning models are able to estimate angle (relative to a mean direction of the image sensor e.g. camera that collected an image) from pixel offset within an image, and are able to estimate depth/distance from various factors, e.g. such as context of a feature within an image, and focus/blur information, and they achieve such abilities by virtue of having been trained on large amounts of example training data. The exact training algorithm and training data used is unimportant, but nevertheless such machine learning models are able to relatively quickly produce an estimated point cloud comprising a relatively large number of estimated point positions from a 2-dimansion image. Algorithm-based approaches could also be used if they could deliver similar abilities. However, prior approaches have been unable to generate point positions having high enough accuracy for some applications. The inventors have noted such limitations and sought to overcome them, and the present disclosure improves the accuracy of the point positions generated by such machine-learning models. As described herein, this improved accuracy is brought about by the determination of a transformation, as set out in the first aspect below, which transformation can be stored (or transmitted for storage), and later used (as in the second aspect) to transform an estimated point cloud (i.e. one that has been estimated by a machine-learning model) into a transformed point cloud that has improved accuracy compared to said estimated point cloud. Thus, the production of relatively high-accuracy point clouds from 2-dimensional images is provided for, which permits relatively high accuracy and high speed surveying of features, and enables such surveying within confined spaces (such as the inside of pipes), which has not hitherto been easily achievable.

In a first aspect there is provided a method for generating a point cloud from an image of a scene, wherein a point cloud comprises a plurality of point positions in three-dimensional space corresponding to features of a scene, the method comprising:
obtaining image data representing an image of a scene as captured by an image sensor;
generating, based on the image data, an estimated point cloud comprising a plurality of estimated point positions corresponding to features of the scene, by using a machine-learning model trained to estimate point positions from such image data;
selecting one or more features of the scene;
obtaining, a measured point cloud comprising a plurality of measured point positions measured using electronic distance measurement, said plurality of measured point positions comprising at least respective measured point positions corresponding to the selected one or more features;
comparing respective ones of the estimated point positions that correspond to the selected one or more features, and the respective ones of the measured point positions that correspond to the selected one or more features;
determining based on the comparison, a transformation that can be applied to the plurality of estimated point positions, such that the respective ones of the estimated point positions more closely align with the respective ones of the measured point positions; and
storing the transformation in a computer-readable memory

Thus, a transformation is determined that can be used to transform an estimated point cloud into a transformed point cloud that is more accurate than the estimated point cloud, said estimated point cloud comprising a plurality of estimated point positions corresponding to features of a scene and having been generated by using a machine-learning model trained to estimate point positions based on image data representing an image of the scene as captured by an image sensor. Such use of the transformation is detailed in the second aspect below.

Optionally, the method further comprises obtaining metadata associated with the image data, the metadata comprising one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.

Optionally, the method further comprises, prior to the step of generating an estimated point cloud, correcting the image data based on the metadata, to compensate for characteristics of the image sensor.

Optionally, the method further comprises, prior to the step of generating an estimated point cloud, combining image data representing multiple images captured by the image sensor, wherein the step of generating an estimated point cloud is based upon the combined image data.

Optionally, the method further comprises, prior to the selecting step, combining multiple estimated point clouds resulting from multiple generating steps each based on separate image data representing a respective image of the scene as captured by the image sensor or by another image sensor.

Optionally, the image sensor orientation is defined relative to a reference direction. Optionally, the image sensor position is defined relative to an anchor point, and the plurality of point positions in three-dimensional space are defined relative to the anchor point. Optionally, the anchor point is a fixed position relative to a position at which an instrument used for obtaining the measured point cloud is positioned.

Optionally, the step of selecting is preceded by a step of rectifying the estimated point cloud based on the metadata, and based on parameters of an instrument used for obtaining the measured point cloud, and optionally wherein the parameters comprise a location and orientation of the instrument.

Optionally, the selected one or more features are features that are identifiable for registration of the estimated point cloud and the measured point cloud, each of said identifiable features comprising one or more of a point, a cluster of points, a line, an edge, an intersection between lines, an intersection between planes, an object boundary, a boundary of an area in a plane, and a boundary between two or more contrasting image areas.

Optionally, the selected one or more features correspond to respective ones of the estimated point positions.

Optionally, the selecting is performed manually by an operator. Alternatively, the selecting is performed automatically by virtue of automatically identifying said identifiable features in at least one of the image data, further image data from an image sensor of an instrument used for obtaining the measured point cloud, and point cloud data obtained by an instrument used for obtaining the measured point cloud.

Optionally, the number of features selected is at least equal to the number of degrees of freedom by which the estimated point cloud is to be aligned by the transformation.

Optionally, the step of obtaining the measured point cloud comprises causing an automated measuring instrument to obtain the measured point cloud, and optionally the measured point positions correspond to the selected features of the scene.

Optionally, the method further comprises: subsequent to obtaining the measured point cloud, subdividing the estimated point cloud into two or more regions based on distance between corresponding measured and estimated point positions, wherein a first region predominantly comprises estimated point positions distanced from corresponding measured point positions by distances under a threshold, and a second region predominantly comprises estimated point positions distanced from corresponding measured point positions by distances over or above the threshold; and, prior to the comparing, deselecting features corresponding to the first region.

Optionally, the transformation comprises one or more of scaling, rotating and translating the point cloud by respective adjustment factors, wherein the adjustment factors are based on differences between the respective ones of the estimated point positions that correspond to the selected one or more features, and the respective ones of the measured point positions that correspond to the selected one or more features.

Optionally, the machine learning model is a machine learning model trained to estimate a corresponding point position for each of a plurality of elements of the image data.

Optionally, the machine learning model is a machine learning model trained to estimate a direction of each element of the image data based on such metadata.

Optionally, the machine learning model is a machine learning model trained to estimate a range of each element of the image data based upon the context of the respective element within the image data.

Optionally, the machine learning model is a machine learning model further trained to estimate a direction and/or range of each element of the image data additionally based on characteristics of a lens of the image sensor.

Optionally, the machine learning model is a machine learning model trained on virtual images from a virtual camera. Alternatively, the machine learning model is a machine learning model trained on real images from a real image sensor.

In a second aspect there is provided a method of generating a point cloud from an image of a scene, wherein a point cloud comprises a plurality of point positions in three-dimensional space corresponding to features of a scene, the method comprising:
obtaining image data representing an image of a scene as captured by an image sensor;
generating, based on the image data, an estimated point cloud comprising a plurality of estimated point positions corresponding to features of the scene, by using a machine-learning model trained to estimate point positions from such image data; and
transforming the estimated point cloud into a transformed point cloud using a transformation that has been determined in accordance with the method of the first aspect.

Optionally, the method further comprises, prior to the step of generating an estimated point cloud, correcting the image data to compensate for characteristics of the image sensor, said characteristics optionally comprising one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.

Optionally, the method further comprises, prior to the step of generating an estimated point cloud, combining image data representing multiple images captured by the image sensor, wherein the step of generating an estimated point cloud is based upon the combined image data.

Optionally, the method further comprises, prior to the transforming step, combining multiple estimated point clouds resulting from multiple generating steps each based on separate image data representing a respective image of the scene as captured by the image sensor or by another image sensor.

Optionally, the step of transforming is preceded by a step of rectifying the estimated point cloud based on one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.

Optionally, prior to the step of transforming, the transformation is retrieved from a computer-readable memory.

Optionally, the method of the second aspect further comprises one or more of: displaying the transformed point cloud to a user; transmitting the transformed point cloud to a computing device over a computer network; and storing the transformed point cloud in a computer-readable memory.

Optionally the method of the second aspect further comprises, subsequent to the step of transforming, iterating by repeating the comparing and determining steps of the first aspect, and transforming the estimated point cloud into a successive transformed point cloud using each successive transformation that results from each iterated determining step.

Optionally, the method of the first or second aspect further comprises retraining the machine-learning model based upon a result of the comparing.

In a third aspect there is provided a device comprising a processor, and a memory in communication with the processor, wherein the processor is arranged to carry out a method as defined in the first or second aspects.

In a fourth aspect there is provided a system comprising: the device of the third aspect; an image sensor arranged to obtain image data representing an image of a scene; and an instrument arranged to obtain by electronic distance measurement a measured point cloud comprising measured point positions corresponding to features of the scene; wherein the image sensor and the instrument are arranged for communication with the device.

In a fifth aspect there is provided a computer-readable medium comprising instructions which when executed cause one or more processors to carry out a method as defined in the first or second aspect.

In a sixth aspect there is provided a computer program product comprising instructions which when executed cause one or more processors to carry out a method as defined in the first or second aspect.

Aspects of the present disclosure of the present application are set out in the independent claims. Other aspects of the present disclosure will be appreciated from the following description.

### BRIEF DESCRIPTION OF THE DRAWINGS

Aspects of the present disclosure will now be described, by way of example only, with reference to the accompanying drawings, in which:
Fig. 1 is a pictorial representation of an example "Total Station" instrument for measuring point positions of features in 3-dimensional space;
Fig. 2 is a pictorial representation of an example "Scanner" instrument for measuring point positions of features in 3-dimensional space;
Fig. 3 is a representation of an example scene to be surveyed, including a number of features, denoted by the letter "O", such as lines, intersections, edges, corners etc.;
Fig. 4 is a representation of the example scene, illustrating a number of measured point positions of a measured point cloud, denoted by the letter "x" or "X", certain ones of said measured point positions corresponding to certain features of the scene that can be selected, denoted by the letter "X";
Fig. 5 is a representation of the example scene, illustrating a number of estimated point positions of an estimated point cloud, denoted by the symbol "+", such as that which can be generated by a machine-learning model from a 2-dimensional image of the scene;
Fig. 6 is a representation of the example scene, illustrating certain ones of the measured point positions corresponding to the selected features, certain ones of the estimated point positions corresponding to the selected features, and pictorially illustrating a transformation (in this example, a rotation) that can be applied to the estimated point positions to transform them such that they more closely match those measured point positions;
Fig. 7 is a representation of the example scene, pictorially illustrating the estimated point positions after the transformation has been applied to them, otherwise termed the transformed point positions, such that they more closely match corresponding ones of the measured point positions;
Fig. 8a illustrates an example scene, in which multiple 2-dimensional images can be taken by an image sensor, each of which can be used to generate an estimated point cloud;
Fig. 8b illustrates an example combined estimated point cloud comprising estimated point positions derived from each of the multiple images taken in Fig. 8a;
Fig. 9 illustrates data objects that are the subjects of a first described method in which a transformation is determined as described herein;
Fig. 10 illustrates data objects that are the subjects of a second described method in which the previously determined transformation is used to transform an estimated point cloud into a transformed point cloud that is more accurate than the estimated point cloud;
Figs. 11a and 11b illustrate a flow diagram setting out steps of the first described method referred to above with reference to Fig. 9;
Figs. 12a and 12b illustrate a flow diagram setting out steps of the second described method referred to above with reference to Fig. 10;
Fig. 13 shows elements of a networked computer-based system in which the disclosed methods can be carried out; and
Fig. 14 shows an example computing device suitable for implementing the operations described herein.

### DETAILED DESCRIPTION

Details and advantages of aspects of the present disclosure will now be described with reference to the drawings.

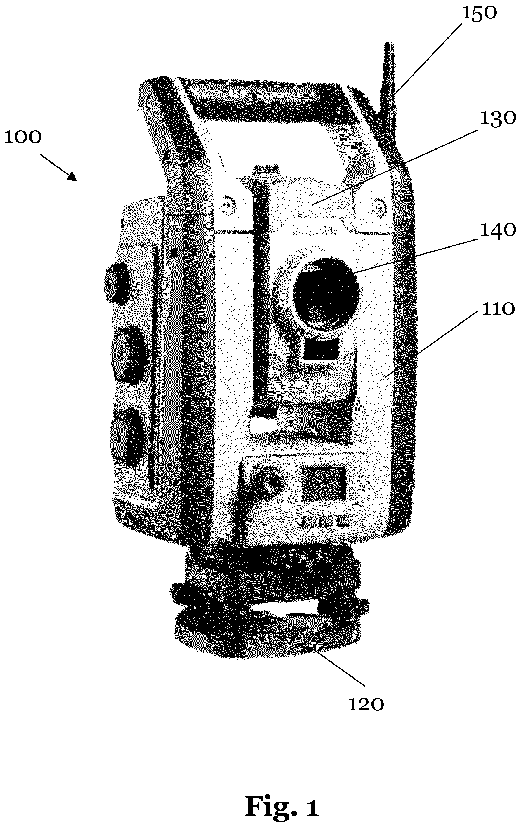

Fig. 1 shows an example of an instrument known as a "Total Station" which is commonly used for surveying (e.g. in the field of civil engineering and construction), and has a base 120, a body 110 which is rotatably mounted to the base 120. Within the body 110 is mounted a sensor head 130 which is rotatably mounted to the body 110 and comprises at least one sensor 140. Typically the at least one sensor 140 includes an electronic distance measuring sensor (which e.g. can comprise a laser for producing a laser beam for striking an object at a distance, and a sensor for detecting a reflected portion of said laser beam). The at least one sensor 140 can also include an imaging sensor (such as a digital camera image sensor), which can be used to record colour/luminance of an object or feature in a scene that is being measured, and said colour/luminance information can be useful for visualising the captured data (e.g. each measured point can be displayed on a screen as a correspondingly coloured/shaded point in a 2-dimensional projection of its measured position in 3-dimensional space, such that when a large number or "cloud" of such position points are drawn on-screen, the result tends to mimic the scene as viewed by the naked eye or by a digital camera, and the greater the number of points in such a "point cloud" the more closely the 2-dimensional projection resembles the scene).

Typically, the body 110 is rotatable about a vertical axis, relative to the base, and the sensor head 130 is rotatable about a horizontal axis, such that the combination of both rotations under computer control provides for the sensor head 130 with its sensor 140 to be angled in any direction. This allows the sensor head 130 to be pointed at any given object in a scene that may be wished to be surveyed. Angle sensors are also present for sensing the angle of the body 110 versus the base 120, and the angle of the sensor head 130 versus the body 110, from which an orientation of the sensor head 130 can be determined.

The base 120 is typically mounted to a tripod (not shown) that can be set up at any suitable position in the field, and an initial operation can then be performed, known as "stationing", in which: the sensor head 130 is pointed at a known landmark that has known global coordinates; distance to the landmark is calculated based on the time taken for the laser beam to travel to and from the landmark; the angle of the body 110 relative to the base 120 is noted (sensed by an angle sensor); the angle of the sensor head 130 relative to the body 110 is also noted (sensed by another sensor); and then the process is repeated for another known landmark. From the respective distances and angles to the two landmarks, the Total Station 100 (or a processing unit in communication with the Total Station 100) is able to calculate the Total Station's position relative to each landmark. By further knowledge of at least one of the landmarks' absolute global positions, the Total Station 100 (or processing unit) is further able to calculate the Total Station's absolute global position, and is able to reference the Total Station's base-to-body angle to a reference direction such as global North. An "anchor point" can also be defined, which is a position relative to which the Total Station's own position, and all positions measured by the Total Station, can be defined. For example, the anchor point can be defined as the position of the Total Station, or the location of one of the known landmarks, or the location of any other fixed location (such as the position of the head of a stake driven into the ground), the position of which can be measured by the Total Station. Typically, the anchor point is defined as position (0,0,0) in X, Y, Z terms, such that the position of all other objects, including the Total Station's own position, is defined relative to that reference anchor position.

Having then determined the Total Station's position relative to the anchor point, and the Total Station's orientation relative to the reference direction, the Total Station can be used to measure the location of any feature or object that it can see by line of sight. Total Station measurements take some time, because for each measurement the sensor head 130 must be moved so that the feature or object is precisely centred in the view of the sensor 140. This usually entails a computer or a user issuing commands to control motors to rotate the body 110 relative to the base 120, and to rotate the sensor head 130 relative to the body 110, so it will be seen that each measurement taken by a Total Station can take of the order of 1 second per measurement. The Total Station 100 also typically has a wireless network antenna 150 for communication with an external controller (not shown in Fig. 1), wherein an external controller can control the movement of the Total Station 100 via the antenna 150, and the Total Station 100 sends image data and measurement data to the controller via the antenna 150.

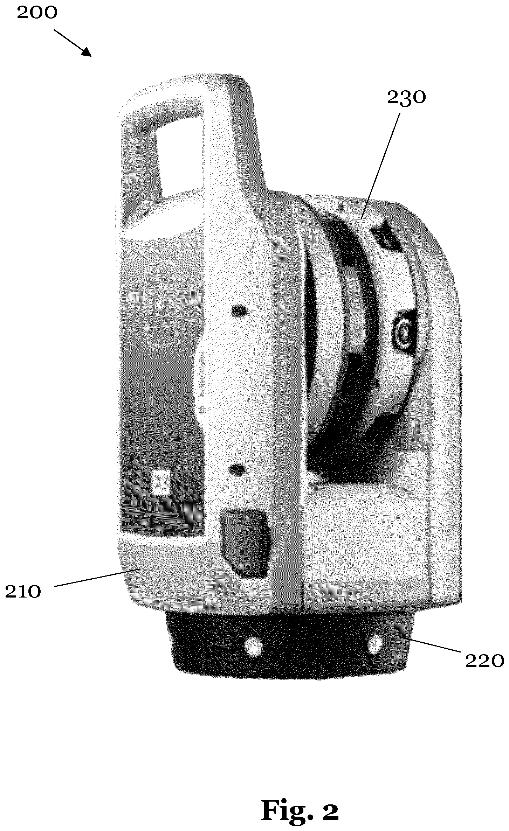

Fig. 2 shows an example of an instrument known as a "Scanner" 200, or "Laser Scanner". In common with a Total Station 100, the Scanner has a base 220, to which is rotatably mounted a body 210 which can rotate about a vertical axis relative to the base 220, with an angle sensor present for sensing the relative rotation of the body 210 versus the base 220. Rotatably mounted to the body 210 of the scanner 200, there is a mirror head assembly 230 which in use rotates about a horizontal axis. A laser source is typically mounted within the scanner body 210, which is directed at the spinning mirror head assembly 230, such that as the mirror head assembly 230 rotates, the laser beam strikes mirrors which are attached to the outer circumference of the mirror head assembly 230 and is reflected off said mirrors such that the resulting laser beam scans up and down at high speed. The rotational position of the spinning mirror head assembly 230 is sensed by virtue of an angle sensor. This scanning in the up/down direction can be combined with controlled rotation of the body 210 relative to the base 220, such that the resulting laser beam can relatively rapidly scan a scene (compared with use of a Total Station) and (by measuring time taken for the beam to travel to and from objects / features in the scene, thereby measuring distance, and by sensing the angle of the rotating mirror head assembly 230 and the angle of the body 210 relative to the base 220) produce a relatively large number of measured point positions in a relatively short time, compared with using a Total Station. The combination of both angle sensors allows the orientation of the Scanner's laser beam and associated image sensor to be determined. The Scanner 200 may exhibit slightly lower accuracy than a Total Station 100, thereby justifying the use of a Total Station 100 when higher accuracy is desired. Like the above-described "Stationing" process used for initial setup of a Total Station 100, a similar process is used for the Scanner 200, and thereafter the point positions measured by the Scanner 200 can be referenced to an anchor point, as for point positions measured by a Total Station 100.

Both Total Stations 100 and Scanners 200 have limitations in certain situations. For example, Total Stations 100 operate too slowly to efficiently gather large numbers of measures point positions for a large "point cloud" consisting of a large number of such point positions. Scanners 200 are able to measure large numbers of point positions relatively rapidly due to their rotating mirror head assembly 230, but they have lower accuracy than Total Stations 100. In addition, both Scanners 200 and Total Stations 100 are relatively large, which makes them unsuitable for use within confined spaces such as inside pipes, and even when such a confined space is physically large enough for such instruments to enter, the instruments remain unsuitable for use in many cases because they have a limit on minimum measurement distance (e.g. the minimum distance that a Scanner 200 can measure is of the order of around 0.5m). The inventors have overcome such limitations by the methods and apparatus disclosed herein, which will be described in more detail below.

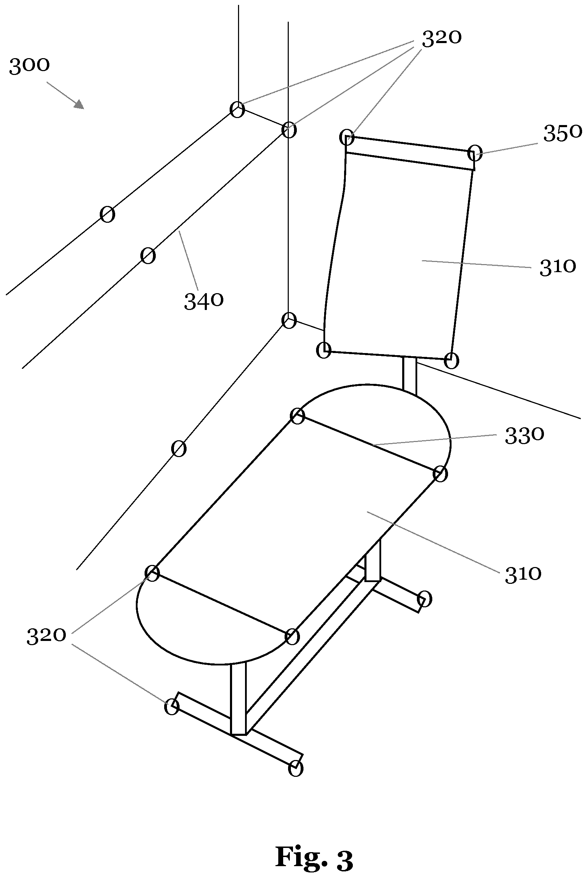

An example scene 300 is shown in Fig.3, which in the shown example is a scene 300 having two objects 310 (a table and a whiteboard), in a room having a wall comprising a shelf portion (see edge 340). The various objects 310 have features 320 such as points, lines 330, corners 350 (formed by intersection and termination of such lines 330 at a common point), edges 340 (e.g. formed by intersection of planes), and other intersections of planes and/or lines. It will be appreciated that any scene 300 may comprise objects 310 and/or features 320 having such points, lines 330 (e.g. at a boundary between a bright area and a dark area), edges 340 (e.g. where two flat planes meet), corners 350 (where two lines meet at a common termination point), etc., and it will further be appreciated that the positions of such features can be individually identified from image data (e.g. from a digital camera image) or can be identified from bulk-acquired point positions (e.g. from a large collection of point positions rapidly measured by a Scanner 200).

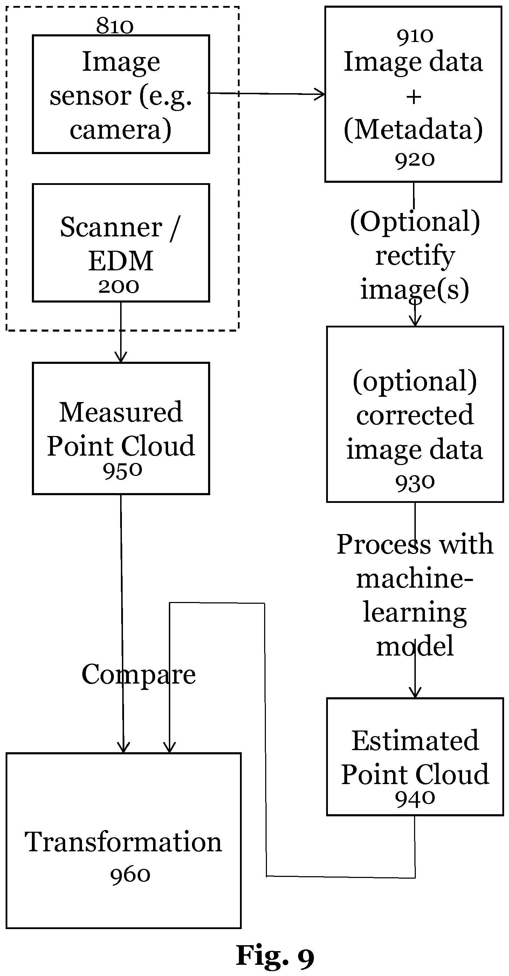

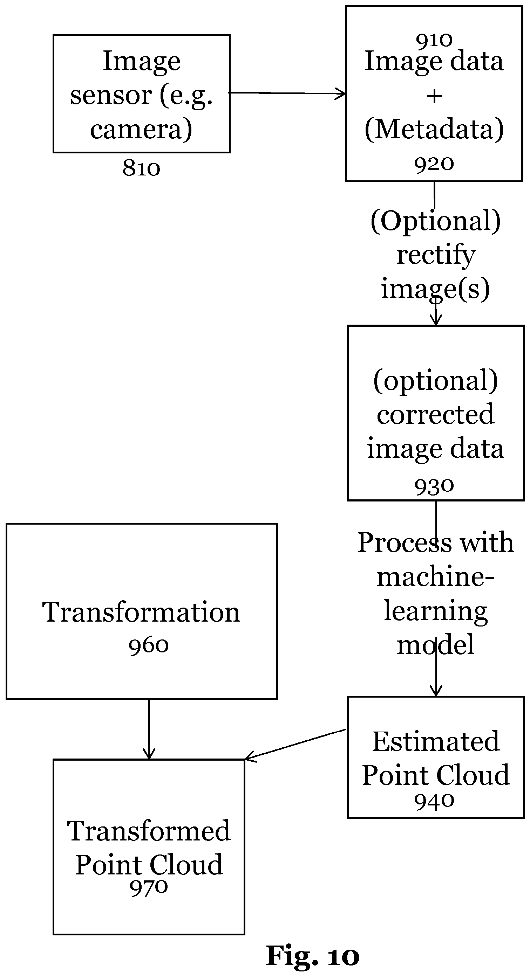

As illustrated in Fig. 9, with reference to Figs. 10-13, the present disclosure, in general, provides a method for generating a point cloud (said point cloud comprising a plurality of point positions in three-dimensional space, said point positions corresponding to features 320 of a scene 300) from an image of a scene 300 (such as a two-dimensional image taken by an image sensor 810 such as a digital camera sensor).

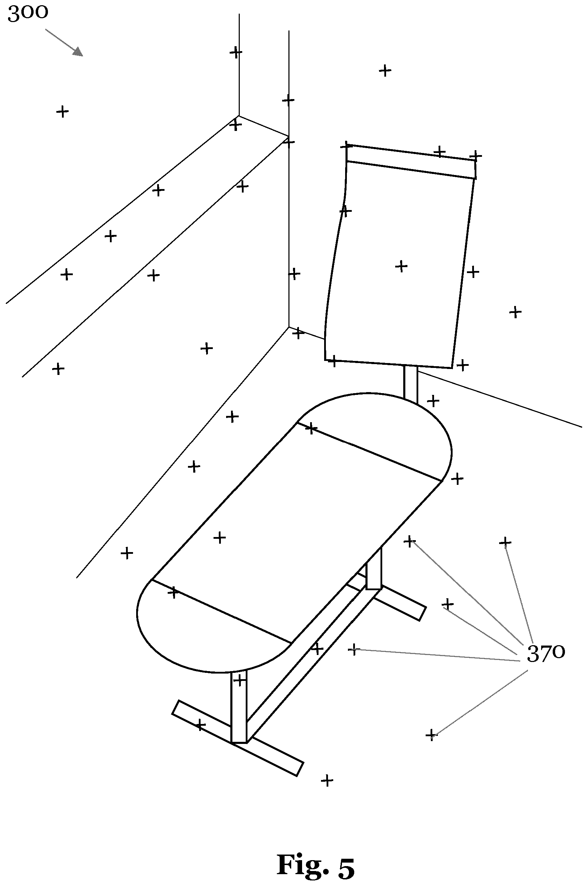

Firstly, an estimated point cloud 940 (as shown in Fig. 5) comprising a plurality of estimated point positions 370 is generated 1115 from obtained 1100 image data 910 representing the image, by use of a machine-learning model 1340 that is or has been at least partially trained to estimate said estimated point positions from such image data 910. The particular machine-learning model and/or the data upon which it has been trained is not essential, provided that the machine-learning model 1340 can provide a depth estimate for at least a subset of pixels in an image that is fed to it. No detailed knowledge of the machine-learning model's internal parameters or training data is required. An example of such a machine-learning model is "DepthPro" (available at https://huggingface.co/apple/DepthPro), it being acknowledged that any Trademarks are property of their respective owners.

Additionally, one or more features 320 of the scene 300 are selected 1135 (this can be done based on the image data 910, or based on other data such as a measured point cloud captured by a Total Station 100 or a Scanner 200 or another instrument such as electronic distance measurement, EDM, instrument 820), such as the features 320 denoted by the letter "O" in Fig. 3.

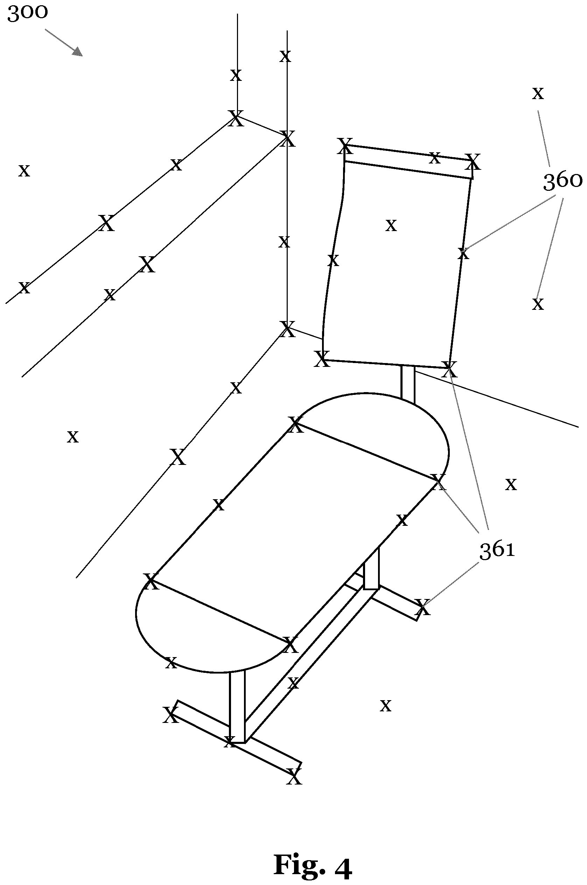

Furthermore, a measured point cloud 950 is obtained 1140 as shown in Fig. 4, comprising a plurality of measured point positions 360, 361 measured using electronic distance measurement (e.g. based on time taken for light to travel from a light emitter such as a laser source to a target feature 320, and for a reflected portion of such light to be received back at a detector near the light emitter, other methods of electronic distance measurement being intended to be encompassed by this disclosure, since the exact method of electronic distance measurement is not essential). The measured point cloud 950 can be obtained either before feature selection (in which case a large number of point positions would be measured, e.g. measured point positions 360 and 361 shown in Fig. 4, the number being sufficient to make it likely that a sufficient number of them correspond with whichever features 320 are selected), or after feature selection (in which case the point positions to be measured can be chosen based on the selected features, such as only the measured point positions 361 as shown in Fig. 4 that correspond to the selected features, thereby enabling slower measurement devices such as a Total Station 100 to be used for point position measurement instead of a Scanner 200).

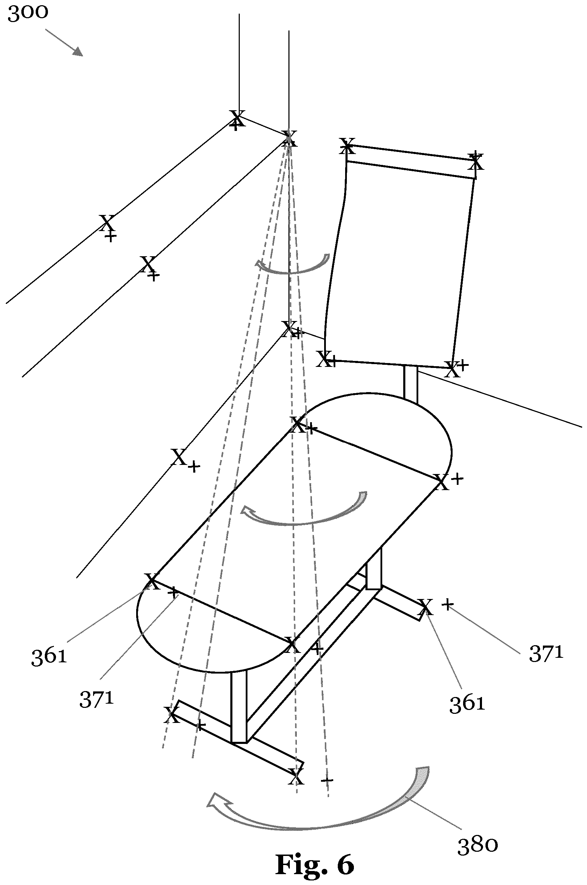

Respective ones of the estimated point positions and the measured point positions, each of which correspond to ones of the selected features, are then compared 1150. Based on the comparison 1150, a transformation 960 is determined 1155, said transformation 960 being one that can be applied to the estimated point positions of the estimated point cloud 940 to transform them into transformed point positions that more closely match their respective corresponding measured point positions of the measured point cloud 950. The transformation process can otherwise be termed "re-registering". The resulting transformation 960, which e.g. might (depending on how the estimated point positions differ from the measured point positions) prove to include a scaling of point coordinates, a translation/shift along one or more axes, or a rotation of a certain number of degrees about a certain rotation point, or any combination of those operations, can be expressed in various known ways including e.g. vector equations and/or mapping tables, and can be stored 1160 in a memory 1360 for later use, and/or transmitted to another device across a computer network 1310 for use or storage 1160. For example, Fig. 6 shows a representation 380 of the transformation 960, which in that example is a rotation of the set of estimated point positions 370, 371, such that the estimated point positions 371 that correspond with the selected features 320 more closely align with the measured point positions 361 that correspond with the selected features 320. The process of determining the transformation 960 can otherwise be termed "point set registration", and any suitable existing technique for determining a transformation from two sets of location points (i.e. a first set being at least a subset of the estimated point cloud 940, and a second set being at least a subset of the measured point cloud 950) can be used. The transformation 960 can then be stored or transmitted over a network for storage, and subsequently used to generate more accurate point clouds from image data 910.

In a subsequent method, once the transformation 960 has been determined and made available (e.g. stored in local memory, or in memory accessible over a network 1310) for subsequent use in the above manner, the same or other image data 910 can be obtained 1200 e.g. directly or indirectly from the same image sensor 810 or from another similar image sensor, of the same scene 300 or of another scene.

As before, the machine-learning model 1340 is used to generate 1215 an estimated point cloud 940 comprising a plurality of estimated point positions 370 (e.g. as shown in Fig. 5), from the two-dimensional image data 910. Preferably the machine-learning model 1340 in this subsequent method is the same machine-learning model 1340 as used in the method that determined 1155 the transformation 960, since that would render it more likely that the transformation 960 would be appropriate for improving the accuracy of the estimated point positions within the estimated point cloud 940.

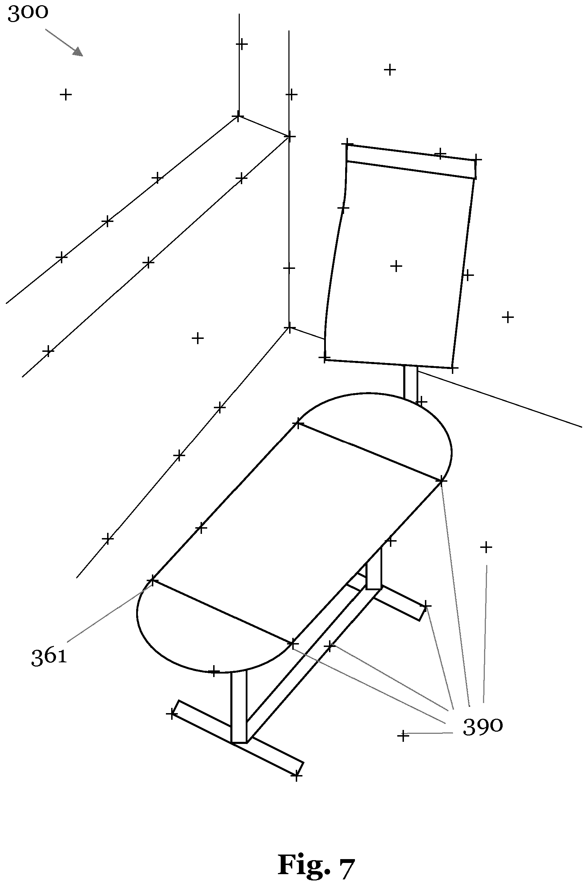

The transformation 960 is then used to transform 1235 the estimated point cloud 940 into a transformed point cloud 970 such that the transformed point positions 390 (as shown in Fig. 7) in the transformed point cloud 970 more accurately match the true locations of the corresponding features 320 of the scene 300. The result of applying the transformation 960 to the estimated point cloud can be seen by comparing Figs. 5 and 7.

Thus, a point cloud comprising a relatively large number of point positions can be relatively quickly and accurately generated from a two-dimensional image, the generated point cloud having greater accuracy than with previous approaches, and thus only a relatively simple, cheap and compact image sensor is required. Speed and efficiency are increased compared to measurement of point positions using electronic distance measurement (EDM), and the disclosed methods also increase flexibility by allowing generation of point clouds inside locations having restricted size, such as inside pipes, where electronic distance measurement may not be suitable due to the size of EDM instruments and due to limitations on minimum distance measurement that exist with such EDM instruments.

The methods will now be described in more detail, in accordance with an example embodiment.

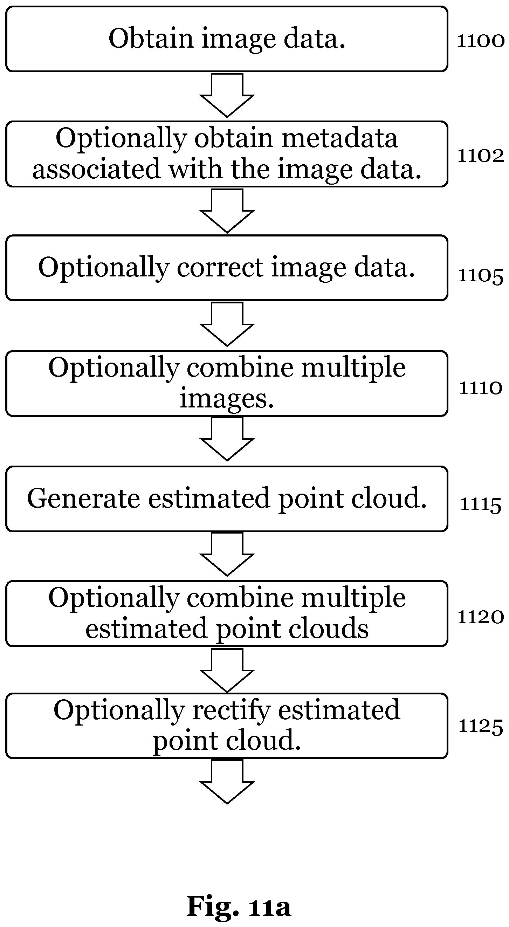

Referring to Figs. 11a-11b, there is provided a method for generating a point cloud from an image of a scene 300. A point cloud comprises a plurality of point positions in three-dimensional space. In the disclosed example, at least some of said point positions correspond to features of a scene 300 (e.g. a scene that is to be surveyed, such as a construction site).

At step 1100, image data 910 representing an image of such a scene is obtained, said image as captured by an image sensor 810. Such image data 910 can for example be obtained from an image sensor 810 such as a digital camera, or from an image sensor that is integrated into a Total Station 100 such as the Ri Total Station made by Trimble Inc., or from an image sensor that is integrated into a Scanner 200 such as the X7 Scanner made by Trimble Inc., or alternatively said image data 910 can be retrieved from a computer memory 1360, or obtained via a network 1310.

Optionally at step 1102, metadata 920 associated with the image data 910 can be obtained. For example, such metadata 920 can comprise one or more of: a position of the image sensor 810 from which the image data 910 originated; an orientation of the image sensor 810; a focal length of a lens of the image sensor 810; an angular scale per pixel of the image sensor 810; a respective angle for each pixel of the image sensor 810; and other image distortion characteristics, e.g. mapped per pixel of the image sensor 810. The metadata 920 can, for example, be obtained from the same source as the image data 910, or can be obtained via the network 1310, or from a memory 1360. Optionally, the image sensor orientation is defined relative to a reference direction. Optionally, the image sensor position is defined relative to an anchor point (e.g. the position of a stake in the ground, a position of the head of which has been measured, such that the anchor point is a fixed position relative to a position at which an instrument used for obtaining the measured point cloud is positioned), and the plurality of point positions in three-dimensional space are defined relative to the anchor point.

Optionally at step 1105, the image data 910 is corrected based on the metadata 920, to compensate for characteristics of the image sensor 810, resulting in corrected image data 930. For example: the image data 910 can be re-centred or skewed based on the position of the image sensor 810 (e.g. relative to a position of an instrument used for electronic distance measurement at step 1140); and/or the image data 910 can be adjusted to account for the orientation of the image sensor 810; and/or the image data 910 can be corrected based on a focal length and/or angular scale factor of the image sensor, and/or based on respective incident light angle and/or distortion characteristic mapping per pixel of a lens of the image sensor 810. These corrections can be made to improve linearity of pixel position versus angular offset of light entering the lens, which can improve the accuracy with which images are converted to point clouds.

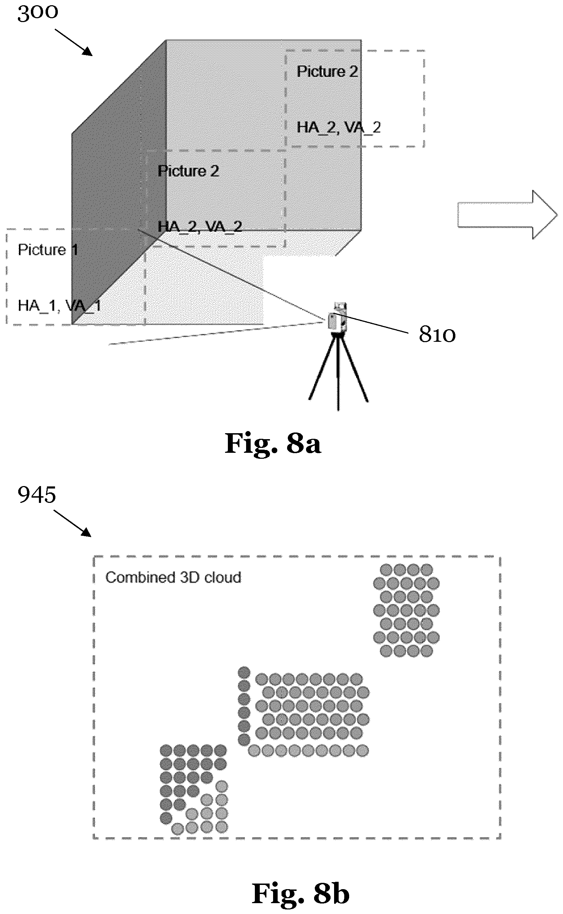

Optionally at step 1110, multiple images of a scene 300, as shown in Fig. 8a, can be combined into a single image which is either larger, or higher-resolution, than the individual images before combination. This can increase coverage area and/or accuracy. This step can be carried out either before or after image data correction.

At step 1115, an estimated point cloud 940 is generated based on the image data 910 (optionally based on the combined/corrected image data, if such additional steps have been carried out). The estimated point cloud 940 comprises a plurality of estimated point positions 370, at least some of which correspond to respective ones of a plurality of features 320 of the scene 300. The estimated point cloud 940 is preferably generated 1115 by using a machine-learning model (such as "DepthPro", or other machine-learning model that can infer position and depth from a 2-dimensional image). The particular machine-learning model and the data upon which it has been trained is not essential, and other methods of estimating point positions can be used, including algorithmic methods instead of a machine-learning models, provided that any such alternative method is able to estimate depth and position by some means, from a two-dimensional image. For example, position offset of features 320 within the image represented by the image data 910 can be estimated based on pixel offset from the image centre, either algorithmically or by operation of a trained machine-learning model, and/or depth can be estimated either algorithmically or by operation of a trained machine-learning model based on such factors as image region contrast, image region sharpness and image region offset from an image centre.

Optionally, the machine learning model is a machine learning model trained to estimate a corresponding point position for each of a plurality of elements of the image data, since this maximises the number of generated estimated point positions 370. Optionally, the machine learning model is a machine learning model trained to estimate a direction of each element of the image data further based on such metadata as that optionally obtained at step 1102, since this improves accuracy of position estimation. Optionally, the machine learning model is a machine learning model trained to estimate a range of each element of the image data based upon the context of the respective element within the image data, since this improves the accuracy of depth estimation. Optionally, the machine learning model is a machine learning model further trained to estimate a direction and/or range of each element of the image data additionally based on characteristics of a lens of the image sensor, since this improves the accuracy of estimated point positions 370. Optionally, the machine learning model is a machine learning model trained on virtual images from a virtual camera, since this provides a convenient source of training data. Optionally, the machine learning model is a machine learning model trained on real images from a real image sensor, since this improves the relevance of training data and thus increases the accuracy of the generated estimated point positions 370.

Optionally at step 1120, multiple estimated point clouds 940, each resulting from a respective generating step 1115, can be combined into a single combined estimated point cloud 945. In such cases, each generating step 1115 is based upon separate image data 910, each separate image data 910 representing a respective image of the scene 300 as captured by either the same image sensor 810 or by another image sensor 815, and each respective image can cover the same, or different, or overlapping areas of the scene 300. Thus, a greater amount of image data 810 is processed and used to generate a greater number of estimated point positions, thereby increasing the number of estimated point positions available for potential correspondence with selected features 320 of the scene 300. The result of either step 1110 or step 1120 can be seen in Fig. 8b.

Optionally at step 1125, the estimated point cloud 940 can be rectified based on the metadata. For example: estimated point positions 370 of the estimated point cloud 940 can be re-centred or skewed based on the position of the image sensor 810 (e.g. relative to a position of an instrument that will be used for electronic distance measurement at step 1140); and/or the estimated point cloud 940 can be adjusted (e.g. rotated) to account for the orientation of the image sensor 810; and/or the estimated point cloud 940 can be corrected based on a focal length and/or angular scale factor of the image sensor, and/or respective incident light angle and/or distortion characteristic mapping per pixel of a lens of the image sensor 810; to improve the accuracy of the estimated point positions 370 within the estimated point cloud 940, and/or to ease the comparison between the estimated point cloud 940 and the measured point cloud 950 at step 1150 (e.g. by pre-rotating and/or translating and/or scaling the estimated point cloud 940 to more closely match the measured point cloud 950). This step, if performed, is preferably (but not necessarily) performed prior to step 1135, since this makes it easier to identify estimated point positions 371 which correspond to features 320 that may be selected.

At step 1135, one or more features 320 of the scene 300 are selected. As shown in Fig. 3, an example scene 300 may have a number of objects 310 (e.g. a table, a whiteboard, and a wall having a shelf portion delimited by edge 340), and the various objects 310 may have features 320 such as points, lines 330, edges 340 (e.g. formed by intersection of planes), other intersections of planes and/or lines such as at a boundary between a bright area and a dark area, and corners 350 (where two lines meet at a common termination point), etc. Each of such features 320, e.g. a point, a cluster of points, a line 330, an edge 340, an intersection between lines, a corner 350 where two lines intersect and terminate at a single point, an intersection between planes, an object boundary, a boundary of an area in a plane, and a boundary between two or more contrasting image areas, constitutes a feature that is identifiable (e.g. distinguishable from other elements of the image, such as background noise or shading, and/or able to be clearly identified as laying within a subset of pixels along at least one axis, e.g. the subset having a size compared with the overall image size, the ratio of which corresponds to an accuracy within which a respective feature is identifiable in the image) for registration of the estimated point cloud and the measured point cloud. The positions of such features 320 can be individually identified from the image data 910 and/or can be identified from point cloud data (e.g. a plurality of point positions rapidly gathered by a Scanner 200). Given such criteria as that listed above, features 320 for selection can be identified either manually (by a user) or automatically (e.g. by the use of another suitable trained machine learning model, or by the use of a suitable existing algorithm). Such features 320 can be identified in at least one of: the image data 910; further image data from an image sensor 815 of an instrument used for obtaining the measured point cloud 950; and point cloud data (e.g. the measured point cloud 950, if the number of points collected is sufficient, e.g. if a Scanner 200 is used as the source of measured point cloud data) obtained by an instrument used for obtaining the measured point cloud 950.

At step 1140, a measured point cloud 950 is obtained, the measured point cloud 950 comprising a plurality of measured point positions 360, 361 measured by suitably accurate means such as electronic distance measurement (EDM, in which electromagnetic waves such as laser light are emitted towards a feature, the distance of which is to be measured, and the distance is calculated from the time taken for the electromagnetic wave to travel to the feature, and for a reflected portion of the electromagnetic wave to travel back towards the emitter where it is detected by a sensor). The plurality of measured point positions 360, 361 comprise at least respective measured point positions 361 corresponding to each of the selected one or more features 320. The measured point cloud 950 can be obtained before the step 1135 of selecting features 320, but if the selected features 320 are not known in advance of obtaining the measured point cloud 950 then it is necessary to measure a relatively large number of measured point positions 360 in order to be reasonably confident that after selection of features 320 has been completed there will exist within the measured point cloud 950 a set of measured point positions 361 that correspond reasonably well with the selected features 320, and this requires the use of a Scanner 200 rather than a (slower) Total Station 100. An advantage to this approach, however, is that it is possible to optionally first perform an ICP (iterative closest point) registration of the estimated point cloud 940 and the measured point cloud 950, to match up those point clouds as closely as possible, which makes subsequent selection of features 320 easier. Alternatively, the measured point cloud 950 can be obtained after selection of features 320, in which case only the point positions corresponding to the selected features 320 need to be measured, and therefore in such a case it can be practical to use a Total Station 100 to measure the measured point positions 361 corresponding to the selected features 320 more accurately than a Scanner 200 would do. In either case, optionally the relevant EDM-capable instrument can be caused to carry out the task under computer control as part of the disclosed method.

Optionally at step 1145, the distances or errors between corresponding measured point positions 361 and estimated point positions 371 (which both correspond to a respective one of the selected features 320) can be used to subdivide the estimated point cloud 940 into two or more regions, such as a first region in which the respective distances or errors are under a threshold, and a second region in which the respective distances or errors are over or above the threshold. In other words, said first region predominantly comprises estimated point positions distanced from corresponding measured point positions by distances under a threshold, and said second region predominantly comprises estimated point positions distanced from corresponding measured point positions by distances over or above the threshold. The features corresponding to estimated point positions 370 in the first region can then be deselected and thereby excluded from determination of the translation 960, which helps to improve the accuracy with which the transformation 960 is determined, because estimated and measured point positions that closely match tend to be near an origin/axis of a rotation transformation, and/or near an origin of a scaling operation, and so do not provide sufficient information about the increased errors further away from such origins. Conversely, features corresponding to estimated point positions 370 in the first region can advantageously be considered for use as origin positions for rotations and/or scaling operations.

At step 1150, respective ones of the estimated point positions 370 that correspond to the selected features 320, and respective ones of the measured point positions 360 that correspond to the selected features 320, are compared. For example, for each one of the selected features, a corresponding estimated point position 370 and measured point position 360 are compared, so as to e.g. identify a distance, a rotational offset about a particular rotation axis, and/or a scaling offset, etc., between the two point positions.

At step 1155, a transformation is determined based on the comparison of step 1150, which transformation is determined such that it can be applied to the plurality of estimated point positions 370, 371 of the estimated point cloud 940, such that the respective ones of the estimated point positions 371 that correspond to the selected features 320 are transformed to more closely align with the respective ones of the measured point positions 361 that correspond to the selected features 320. The transformation 960 comprises one or more of scaling, rotating and translating the estimated point cloud 940 by respective adjustment factors, wherein the adjustment factors are based on differences between: the respective ones of the estimated point positions 371 that correspond to the selected one or more features 320; and the respective ones of the measured point positions 361 that correspond to the selected one or more features 320. For example, Fig. 6 shows a representation 380 of the transformation 960, which in that example is a rotation of the set of estimated point positions 370, 371, such that the estimated point positions 371 that correspond with the selected features 320 more closely align with the measured point positions 361 that correspond with the selected features 320. The transformation can take the form of a set of vector equations, and/or a set of transformation constants/factors in a table.

Preferably, the number of features 320 that are selected at step 1135 is at least equal to a number of degrees of freedom by which the estimated point cloud 940 is required to be aligned by the transformation 960, since at least that many features 320 are required in order to arrive at the required transformation 960. For example, a single measurement is sufficient to adjust depth scale, two points are needed to assess scale laterally along a given axis, and 3 points are needed for assessing rotational offset. By further example, 3 points in the same plane are needed to determine a normal vector to the plane. In general, the more measured points there are available, the more degrees of freedom can be solved for. The transformation process can otherwise be termed "re-registering". The process of determining the transformation 960 can otherwise be termed "point set registration", and any suitable existing technique for determining a transformation from two sets of location points (i.e. a first set being at least a subset of the estimated point cloud 940, and a second set being at least a subset of the measured point cloud 950) can be used. For example, the determined transformation can comprise a rigid transformation which does not change the distance between two points (such as translation or rotation), and/or a non-rigid transformation such as an affine transformation such as scaling or shear mapping, and/or a non-linear transformation. The "Point Cloud Library" is an example open-source software library for point cloud processing which includes point registration algorithms that can be used for this.

The separation of steps 1150 and 1155 is merely conceptual, and is not intended to limit the method to having such steps separated. Instead, both steps may be combined in a single step such as a step of determining the transformation based on differences between (i) respective ones of the estimated point positions that correspond to the selected one or more features, and (ii) the respective ones of the measured point positions that correspond to the selected one or more features.

At step 1160, the transformation 960 is stored in a computer-readable memory, at least temporarily, and may further be transmitted over a computer network 1310 to another computing device for use and/or for storage. Optionally, the result of the comparison 1150 and/or the transformation 960 can be fed back into how the estimated point cloud is generated, e.g. used to re-train the machine-learning model or to adjust an algorithm used for such generation.

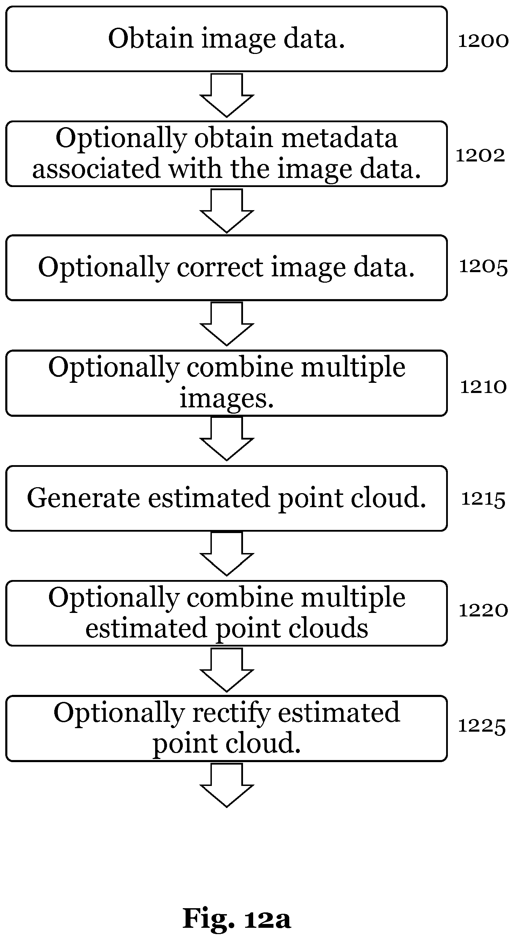

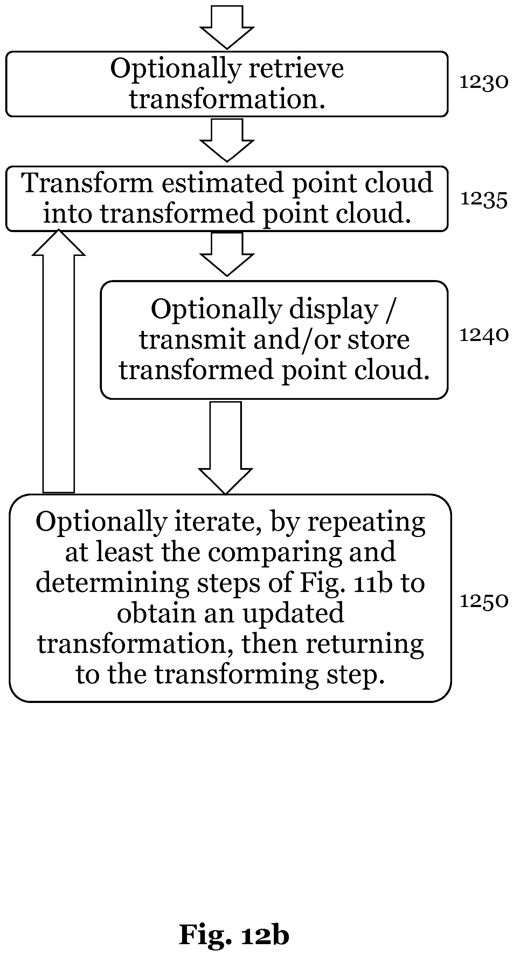

Referring to Figs. 12a-12b, there is provided a method of generating a point cloud from an image of a scene 300, using a transformation 960 such as that which is determined at step 1155 of the method described with reference to Figs. 11a-11b. At step 1200, similarly to step 1100, image data 910 representing an image of such a scene is obtained, said image as captured by an image sensor 810. Such image data 910 can for example be obtained directly or indirectly from an image sensor 810 such as a digital camera, or from an image sensor that is integrated into a Total Station 100 such as the Ri Total Station made by Trimble Inc., or that is integrated into a Scanner 200 such as the X7 Scanner made by Trimble Inc., or alternatively said image data 910 can be retrieved from a computer memory 1360, or obtained via a network 1310. Preferably, the image data 910 is obtained, directly or indirectly, from an image sensor 810 that is separate from any EDM instrument but has similar characteristics to that image sensor 810 which was used in the method of Figs. 11a-11b (this can be advantageous because such a separate image sensor can be smaller and cheaper than an image sensor that is combined with an EDM instrument).

Optionally at step 1202, metadata associated with the image data 910 can be obtained, similarly to step 1102. Optionally at step 1205, the image data 910 can be corrected in a similar manner as at step 1105. Optionally at step 1210, multiple images can be combined in a similar manner as at step 1110.

At step 1215, an estimated point cloud 940 is generated based on the image data 910, similarly to step 1115.

Optionally at step 1220, multiple estimated point clouds 940 can be combined, similarly to step 1120. Optionally, at step 1225, the estimated point cloud 940 (either single or combined multiple) can be rectified, similarly to step 1125.

Optionally at step 1230, if necessary (e.g. if the transformation 960 that was determined at step 1155 is not already to hand in local memory), the transformation 960 that was determined at step 1155 can be retrieved, e.g. retrieved from non-volatile storage, or retrieved from memory 1360 or some other source via a network 1310.

At step 1235 the estimated point cloud 940 is transformed into a transformed point cloud 970 using the transformation 960, which transformation 960 was determined by the method described with reference to Figs. 11a-11b. The transformed point cloud 970 thus comprises a plurality of transformed point positions 390, as shown in Fig. 7, in which respective ones of the transformed point positions 390 more closely align with (or "match") the actual positions of corresponding features 320 of the scene 300, and thus the transformed point positions 390 can be said to be more accurate.

Optionally at step 1240, the transformed point positions 390 of the transformed point cloud 970 can be displayed to a user, e.g. using display 1320, and/or can be transmitted to another computing device via network 1310, and/or can be stored in computer-readable memory 1360.

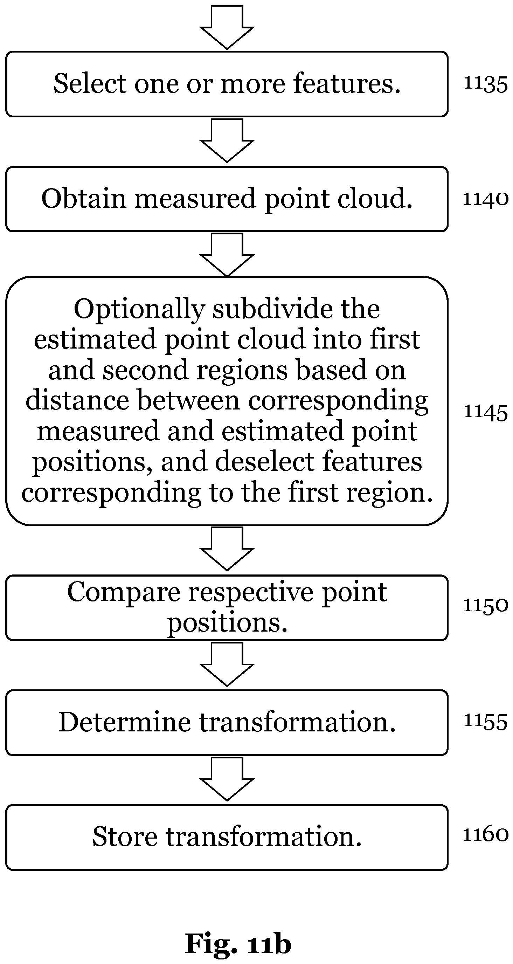

Optionally, before or after step 1240, after step 1235, iteration can be performed comprising repeating the comparing 1150 and determining 1155 steps of Fig. 11b, thereby determining a successive transformation, and then repeating step 1235 in which the estimated point cloud 940 is transformed into a successive transformed point cloud using each successive transformation resulting from each iterated determining 1155 step. This can iteratively improve the accuracy of each successive transformation.

As a result of the image data 910 having been obtained from an image sensor 810 that is separate from any EDM instrument but has similar characteristics to that image sensor 810 which was used in the method of Figs. 11a-11b, image data 910 results that has similar characteristics, and this tends to result in an estimated point cloud 940 that has similar errors as those in the estimated point cloud 940 that was generated in the method of Figs. 11a-11b, and which will thus tend to respond similarly to transformation by the transformation 960. This similarity results in a more accurate transformed point cloud. Furthermore, as a result of the image sensor being separate from any EDM instrument (which EDM instrument is not required for the method of Figs. 12a-12b), the image sensor can be simpler, cheaper, and more compact such that it can be used in confined spaces such as pipes.

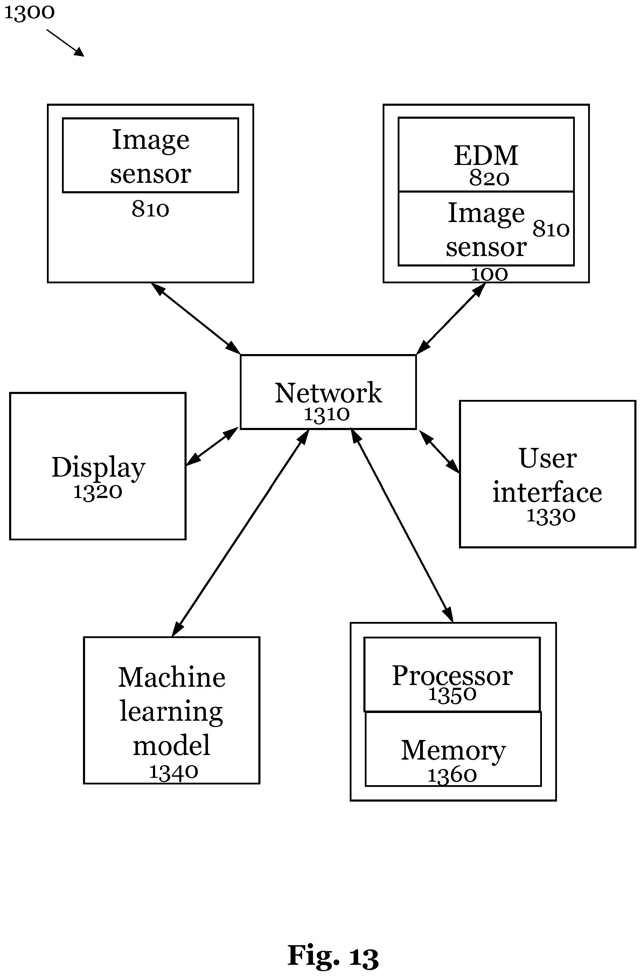

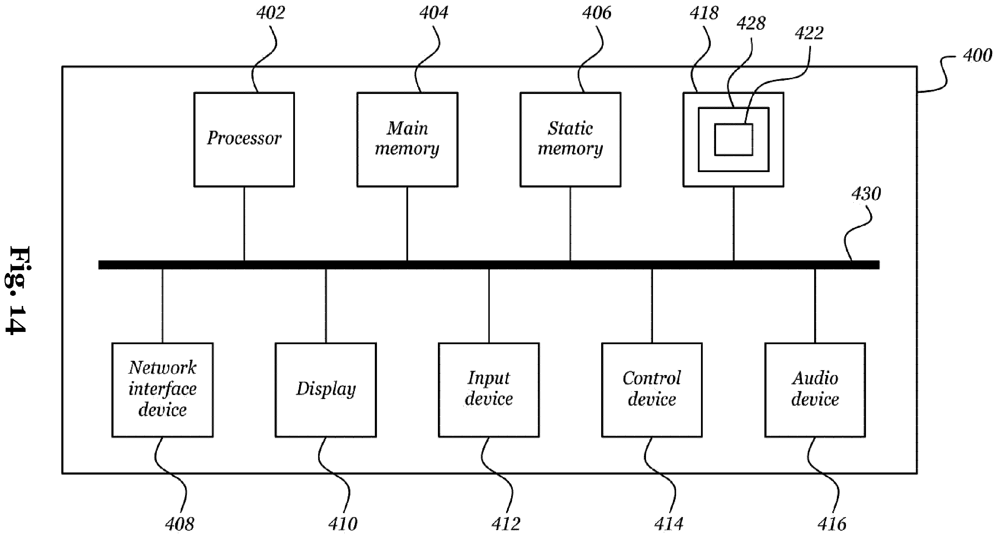

Some or all of the disclosed methods maybe implemented using a computer apparatus or computing device. Accordingly, the methods described herein may form all or part of a computer-implemented method. An example computing device is shown in Fig. 14, and an example networked computer system is shown in Fig. 13.

Referring to Fig. 13, a networked computer system suitable for implementing the disclosed methods can comprise a device having a processor 1350 and a memory 1360 in communication with the processor, the memory 1360 storing computer instructions which when executed by the processor 1350 cause the processor 1350 to carry out one or more of the methods described herein. By way of example, the instructions can be arranged to cause the processor 1350 to carry out the method disclosed with reference to Figs. 11a-11b, and/or Figs 12a-12b, and optionally to implement the machine-learning model 1340 which may be implemented in a separate networked entity or in the same networked entity as that comprising the processor 1350 and memory 1360. The memory 1360 can further be arranged to store the transformation 960, and may comprise one or both of volatile and non-volatile memory. User interface 1330 (e.g. tablet PC) can be provided to receive user input and/or provide feedback to a user, and in particular the user interface 1330 can be arranged to receive a user's selection of the features 320 at step 1135 of the method of Figs. 11a-11b. A display 1320 can be provided (either separately, or combined with the user interface 1330, e.g. in a tablet device) on which any or all of the image data 910, and 2-dimensional projections (or 3-dimensional representations, in the case of a 3-dimensional display) of the measured point cloud 950, estimated point cloud 940 and/or transformed point cloud 970, along with optionally a representation of the selected features 320 in the image data 910, can be displayed to a user. Such displaying may assist a user to choose the selected features, or to steer automatic selection of such features. Also in networked communication with the processor 1350 via the network 1310 is at least one image sensor 810, and typically at least one electronic distance measurement (EDM) instrument 820 (which may include e.g. a Total Station 100 and/or a Scanner 200, which may respectively also comprise their own image sensors 810).

With reference to Fig. 14, a processing system 400 suitable for carrying out the methods described herein will now be described. Fig. 14 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 14 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The application further discloses the subject-matter of the following clauses which may form the basis of one or more claims:
Clause 1. A method for generating a point cloud from an image of a scene, wherein a point cloud comprises a plurality of point positions in three-dimensional space corresponding to features of a scene, the method comprising:
   obtaining image data representing an image of a scene as captured by an image sensor;
   generating, based on the image data, an estimated point cloud comprising a plurality of estimated point positions corresponding to features of the scene, by using a machine-learning model trained to estimate point positions from such image data;
   selecting one or more features of the scene;
   obtaining, a measured point cloud comprising a plurality of measured point positions measured using electronic distance measurement, said plurality of measured point positions comprising at least respective measured point positions corresponding to the selected one or more features;
   comparing respective ones of the estimated point positions that correspond to the selected one or more features, and the respective ones of the measured point positions that correspond to the selected one or more features;
   determining based on the comparison, a transformation that can be applied to the plurality of estimated point positions, such that the respective ones of the estimated point positions more closely align with the respective ones of the measured point positions; and
   storing the transformation in a computer-readable memory.
Clause 2. The method of clause 1, further comprising obtaining metadata associated with the image data, the metadata comprising one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.
Clause 3. The method of clause 2, wherein the method further comprises, prior to the step of generating an estimated point cloud, correcting the image data based on the metadata, to compensate for characteristics of the image sensor.
Clause 4. The method of any of clauses 1 to 3, wherein the method further comprises, prior to the step of generating an estimated point cloud, combining image data representing multiple images captured by the image sensor, wherein the step of generating an estimated point cloud is based upon the combined image data.
Clause 5. The method of any of clauses 1 to 4, wherein the method further comprises, prior to the selecting step, combining multiple estimated point clouds resulting from multiple generating steps each based on separate image data representing a respective image of the scene as captured by the image sensor or by another image sensor.
Clause 6. The method of any of clauses 2 to 5, wherein the image sensor orientation is defined relative to a reference direction.
Clause 7. The method of any of clauses 2 to 6, wherein the image sensor position is defined relative to an anchor point, and the plurality of point positions in three-dimensional space are defined relative to the anchor point.
Clause 8. The method of clause 7, wherein the anchor point is a fixed position relative to a position at which an instrument used for obtaining the measured point cloud is positioned.
Clause 9. The method of any of clauses 2 to 8, wherein the step of selecting is preceded by a step of rectifying the estimated point cloud based on the metadata, and based on parameters of an instrument used for obtaining the measured point cloud, and optionally wherein the parameters comprise a location and orientation of the instrument.
Clause 10. The method of any of clauses 1 to 9, wherein the selected one or more features are features that are identifiable for registration of the estimated point cloud and the measured point cloud, each of said identifiable features comprising one or more of a point, a cluster of points, a line, an edge, an intersection between lines, an intersection between planes, an object boundary, a boundary of an area in a plane, and a boundary between two or more contrasting image areas.
Clause 11. The method of any of clauses 1 to 10, wherein the selecting is performed manually by an operator.
Clause 12. The method of clause 10, wherein the selecting is performed automatically by virtue of automatically identifying said identifiable features in at least one of the image data, further image data from an image sensor of an instrument used for obtaining the measured point cloud, and point cloud data obtained by an instrument used for obtaining the measured point cloud.
Clause 13. The method of any of clauses 1 to 12, wherein the number of features selected is at least equal to the number of degrees of freedom by which the estimated point cloud is to be aligned by the transformation.
Clause 14. The method of any of clauses 1 to 13, wherein the step of obtaining the measured point cloud comprises causing an automated measuring instrument to obtain the measured point cloud, and optionally wherein the measured point positions correspond to the selected features of the scene.
Clause 15. The method of any of clauses 1 to 14, further comprising: subsequent to obtaining the measured point cloud, subdividing the estimated point cloud into two or more regions based on distance between corresponding measured and estimated point positions, wherein a first region predominantly comprises estimated point positions distanced from corresponding measured point positions by distances under a threshold, and a second region predominantly comprises estimated point positions distanced from corresponding measured point positions by distances over or above the threshold; and, prior to the comparing, deselecting features corresponding to the first region.
Clause 16. The method of any of clauses 1 to 15, wherein the transformation comprises one or more of scaling, rotating and translating the point cloud by respective adjustment factors, wherein the adjustment factors are based on differences between the respective ones of the estimated point positions that correspond to the selected one or more features, and the respective ones of the measured point positions that correspond to the selected one or more features.
Clause 17. The method of any of clauses 1 to 16, wherein the machine learning model is a machine learning model trained to estimate a corresponding point position for each of a plurality of elements of the image data.
Clause 18. The method of any of clauses 2 to 17, wherein the machine learning model is a machine learning model trained to estimate a direction of each element of the image data based on such metadata.
Clause 19. The method of any of clauses 1 to 18, wherein the machine learning model is a machine learning model trained to estimate a range of each element of the image data based upon the context of the respective element within the image data.
Clause 20. The method of any of clauses 1 to 19, wherein the machine learning model is a machine learning model further trained to estimate a direction and/or range of each element of the image data additionally based on characteristics of a lens of the image sensor.
Clause 21. The method of any of clauses 1 to 20, wherein the machine learning model is a machine learning model trained on virtual images from a virtual camera.
Clause 22. The method of any of clauses 1 to 20, wherein the machine learning model is a machine learning model trained on real images from a real image sensor.
Clause 23. A method of generating a point cloud from an image of a scene, wherein a point cloud comprises a plurality of point positions in three-dimensional space corresponding to features of a scene, the method comprising:
   obtaining image data representing an image of a scene as captured by an image sensor;
   generating, based on the image data, an estimated point cloud comprising a plurality of estimated point positions corresponding to features of the scene, by using a machine-learning model trained to estimate point positions from such image data; and
   transforming the estimated point cloud into a transformed point cloud using a transformation that has been determined in accordance with the method of any of clauses 1 to 22.
Clause 24. The method of clause 23, wherein the method further comprises, prior to the step of generating an estimated point cloud, correcting the image data to compensate for characteristics of the image sensor, said characteristics optionally comprising one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.
Clause 25. The method of any of clauses 23 to 24, wherein the method further comprises, prior to the step of generating an estimated point cloud, combining image data representing multiple images captured by the image sensor, wherein the step of generating an estimated point cloud is based upon the combined image data.
Clause 26. The method of any of clauses 23 to 25, wherein the method further comprises, prior to the transforming step, combining multiple estimated point clouds resulting from multiple generating steps each based on separate image data representing a respective image of the scene as captured by the image sensor or by another image sensor.
Clause 27. The method of any of clauses 23 to 26, wherein the step of transforming is preceded by a step of rectifying the estimated point cloud based on one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor.
Clause 28. The method of any of clauses 23 to 27, wherein prior to the step of transforming, the transformation is retrieved from a computer-readable memory.
Clause 29. The method of any of clauses 23 to 28, further comprising one or more of: displaying the transformed point cloud to a user; transmitting the transformed point cloud to a computing device over a computer network; and storing the transformed point cloud in a computer-readable memory.
Clause 30. The method of any of clauses 23 to 29, further comprising, subsequent to the step of transforming, iterating by repeating the comparing and determining steps of clause 1, and transforming the estimated point cloud into a successive transformed point cloud using each successive transformation that results from each iterated determining step.
Clause 31. The method of any of clauses 1 to 30, further comprising retraining the machine-learning model based upon a result of the comparing.
Clause 32. A device comprising a processor, and a memory in communication with the processor, wherein the processor is arranged to carry out a method as defined in any of clauses 1 to 31.
Clause 33. A system comprising: the device of clause 32; an image sensor arranged to obtain image data representing an image of a scene; and an instrument arranged to obtain by electronic distance measurement a measured point cloud comprising measured point positions corresponding to features of the scene; wherein the image sensor and the instrument are arranged for communication with the device.
Clause 34. A computer-readable medium comprising instructions which when executed cause one or more processors to carry out a method as defined in any of clauses 1 to 31.
Clause 35. A computer program product comprising instructions which when executed cause one or more processors to carry out a method as defined in any of clauses 1 to 31.

## Claims

1. A method for generating a point cloud from an image of a scene, wherein a point cloud comprises a plurality of point positions in three-dimensional space corresponding to features of a scene, the method comprising:
obtaining image data representing an image of a scene as captured by an image sensor;
generating, based on the image data, an estimated point cloud comprising a plurality of estimated point positions corresponding to features of the scene, by using a machine-learning model trained to estimate point positions from such image data;
selecting one or more features of the scene;
obtaining, a measured point cloud comprising a plurality of measured point positions measured using electronic distance measurement, said plurality of measured point positions comprising at least respective measured point positions corresponding to the selected one or more features;
comparing respective ones of the estimated point positions that correspond to the selected one or more features, and the respective ones of the measured point positions that correspond to the selected one or more features;
determining based on the comparison, a transformation that can be applied to the plurality of estimated point positions, such that the respective ones of the estimated point positions more closely align with the respective ones of the measured point positions; and
storing the transformation in a computer-readable memory.

2. The method of claim 1, further comprising obtaining metadata associated with the image data, the metadata comprising one or more of: a position of the image sensor; an orientation of the image sensor; a focal length of a lens of the image sensor; an angular scale per pixel of the image sensor; a respective angle for each pixel of the image sensor; and other image distortion characteristics mapped per pixel of the image sensor,
and optionally wherein the method further comprises, prior to the step of generating an estimated point cloud, correcting the image data based on the metadata, to compensate for characteristics of the image sensor.

3. The method of any preceding claim, wherein the method further comprises, prior to the step of generating an estimated point cloud, combining image data representing multiple images captured by the image sensor, wherein the step of generating an estimated point cloud is based upon the combined image data;

4. The method of any preceding claim, wherein the method further comprises, prior to the selecting step, combining multiple estimated point clouds resulting from multiple generating steps each based on separate image data representing a respective image of the scene as captured by the image sensor or by another image sensor.

5. The method of any of claims 2 to 4, wherein the step of selecting is preceded by a step of rectifying the estimated point cloud based on the metadata, and based on parameters of an instrument used for obtaining the measured point cloud.

6. The method of any of claims 1 to 5, wherein the selected one or more features are features that are identifiable for registration of the estimated point cloud and the measured point cloud, each of said identifiable features comprising one or more of a point, a cluster of points, a line, an edge, an intersection between lines, an intersection between planes, an object boundary, a boundary of an area in a plane, and a boundary between two or more contrasting image areas; and wherein the selecting is performed automatically by virtue of automatically identifying said identifiable features in at least one of the image data, further image data from an image sensor of an instrument used for obtaining the measured point cloud, and point cloud data obtained by an instrument used for obtaining the measured point cloud.

7. The method of any preceding claim, wherein the number of features selected is at least equal to the number of degrees of freedom by which the estimated point cloud is to be aligned by the transformation.

8. The method of any preceding claim, wherein the step of obtaining the measured point cloud comprises causing an automated measuring instrument to obtain the measured point cloud, and optionally wherein the measured point positions correspond to the selected features of the scene.

9. The method of any preceding claim, further comprising: subsequent to obtaining the measured point cloud, subdividing the estimated point cloud into two or more regions based on distance between corresponding measured and estimated point positions, wherein a first region predominantly comprises estimated point positions distanced from corresponding measured point positions by distances under a threshold, and a second region predominantly comprises estimated point positions distanced from corresponding measured point positions by distances over or above the threshold; and, prior to the comparing, deselecting features corresponding to the first region.

10. The method of any preceding claim, wherein the transformation comprises one or more of scaling, rotating and translating the point cloud by respective adjustment factors, wherein the adjustment factors are based on differences between the respective ones of the estimated point positions that correspond to the selected one or more features, and the respective ones of the measured point positions that correspond to the selected one or more features.

11. A method of generating a point cloud from an image of a scene, wherein a point cloud comprises a plurality of point positions in three-dimensional space corresponding to features of a scene, the method comprising:
obtaining image data representing an image of a scene as captured by an image sensor;
generating, based on the image data, an estimated point cloud comprising a plurality of estimated point positions corresponding to features of the scene, by using a machine-learning model trained to estimate point positions from such image data; and
transforming the estimated point cloud into a transformed point cloud using a transformation that has been determined in accordance with the method of claim 1.

12. The method of claim 11, further comprising, subsequent to the step of transforming, iterating by repeating the comparing and determining steps of claim 1, and transforming the estimated point cloud into a successive transformed point cloud using each successive transformation that results from each iterated determining step.

13. A device comprising a processor, and a memory in communication with the processor, wherein the processor is arranged to carry out a method as defined in any preceding claim.

14. A system comprising: the device of claim 13; an image sensor arranged to obtain image data representing an image of a scene; and an instrument arranged to obtain by electronic distance measurement a measured point cloud comprising measured point positions corresponding to features of the scene; wherein the image sensor and the instrument are arranged for communication with the device.

15. A computer-readable medium or computer program product, comprising instructions which when executed cause one or more processors to carry out a method as defined in any of claims 1 to 12.
